# EUROPEAN PATENT APPLICATION

(11) **EP 1 349 121 A2**
(43) Date of publication of application: **01.10.2003**
(21) Application number: 03006662.5
(22) Date of filing: 25.03.2003
(51) Int. Cl.: G07F 5/18

(54) **Trading data management system, method and program therefor**

(30) Priority: 27.03.2002 JP 2002089164
(71) Applicant: FUJITSU LIMITED, Kawasaki-shi, Kanagawa 211-8588 (JP)
(72) Inventor: Kurosawa, Ryuji, c/o Fujitsu Limited, Kawasaki-shi, Kanagawa 211-8588 (JP); Kushida, Yasuhira, c/o Fujitsu Limited, Kawasaki-shi, Kanagawa 211-8588 (JP)
(74) Representative: Körfer, Thomas, Dipl.-Phys.

(57) **Abstract**

In a trading data management system including a plurality of clients and a web server connected to the clients via a communications network, when an interruption occurred while the server is receiving data traded in a client for some reason or other, the system restores data that had been transmitted from the client to the server before the interruption of the transmission occurred. The system includes: a unit that receives data traded in one of the clients every time the data is transmitted from the client to the web server; a storage unit that stores the data in a DB server connected to the web server; a unit that determines whether the reception of the trading data has been completed or not; a unit that informs the client that the trading data has not been completely received when the determining unit has determined so; and a unit that returns data stored in the storing unit to the client when the determining unit has determined that the trading data has not been completely received.

## Description

### BACKGROUND OF THE INVENTION

### 1. Field of the Invention

The present invention relates to a trading data management system, a method, and a program therefor, that manages trading data transmitted between a plurality of clients and a server connected via a communications network. In particular, it relates to a trading data management system, a method, and a program therefor, wherein if data transmission from a POS client to a server is interrupted for some reason or other, for example a power failure, and that the server fails to receive the trading data, the system can restore the data that had been transmitted before the interruption occurred.

### 2. Description of the Related Art

In prior art, a trading data management system that manages data entered for each trade on a POS (Point Of Sales) client side, was integrated into the POS client. As technology of communications networks has advanced, a server is now available that communicates with a plurality of POS clients, each located at a distance from the server, via a network, and that can manage data entered for each trade on the side of the plurality of POS clients. In such a trading data management system, each of the plurality of POS clients transmits data entered for each trade from the client to the server and the server receives, accumulates and manages the data.

However, in the above trading data management system, when a server failed to receive trading data transmitted from a POS client to the server during a data transmission period, in other word when a transaction (receiving process) of trading data by the server is interrupted for some reason or other, for example when the client's power supply fails during the data transmission period or a session time out from the client to the server occurs, the data can only be partially received, and therefore the trading data must be transmitted again from the beginning. In this case, the client needs to securely enter the trading data again, which requires time and labor. To avoid this and to make the data reentry easy, it is necessary to store the trading data for the restoration of the transmitted data. To accomplish this, an enormous amount of data must be stored, and therefore the client must be provided with a large capacity auxiliary memory unit, which entails both cost and physical space.

### SUMMARY OF THE INVENTION

Accordingly, it is an object of the present invention to solve the above problems and provide a trading data management system, method and program therefor, that manages data transmitted between a plurality of clients and a server connected via a communications network, wherein if data transmitted from a POS client to a server is interrupted for some reason or other and the server fails to receive the trading data, the data that had been transmitted before the interruption occurred can be restored at the client side without requiring a large capacity external storage unit at the client side.

In order to solve the above problems, according to a first aspect of the present invention, a trading data management system is provided that comprises a plurality of clients and a server connected via a communications network, that manages trading data transmitted from the clients to the server, characterized in that the server comprises: a unit that sequentially receives trading data whenever the data is transmitted from the clients; a unit that stores the trading data received from the clients; a unit that determines whether or not the reception of the trading data has been completed; and a unit that informs the client that the reception of the trading data has not been completed when the determining unit has determined that the reception of the trading data has not been completed.

In the trading data management system, the server further comprises a unit that returns trading data to the client when the determining unit has determined that the reception of the trading data has not been completed, which data had been transmitted until an interruption of the transmission occurred in the previous transmission, and had been accumulated in the server until the interruption.

In the trading data management system, the server further comprises a unit that returns trading data to the client before newly receiving trading data from the client when the determining unit has determined that the reception of the trading data has not been completed, which data had been transmitted until an interruption of the transmission occurred in the previous transmission, and had been accumulated in the server until the interruption.

In the trading data management system, the returning unit comprises a unit that creates screen information involving the trading data to be displayed in the client, and that transmits the created screen data to the client.

In the trading data management system, the storing unit is provided in another server connected to the server.

It is another object of the present invention to solve the above problems and provide a trading data management system, method and program therefor, that manages data transmitted between a plurality of clients and a server connected via a communications network, wherein the management system comprises a plurality of systems each having a plurality of clients and a server, wherein the systems are connected to a common database server for communication, and the data that had been transmitted before the interruption occurred can be restored at the client side without requiring a large capacity external storage unit at the client side.

In order to solve the above problems, according to a second aspect of the present invention, a trading data management system is provided that comprises a plurality of web servers each connected to a plurality of clients via a communications network and a database server connected to the web servers for communication, that manages trading data transmitted from the clients to the web servers, characterized in that the web server comprises: a unit that sequentially receives trading data whenever the data is transmitted from the clients; a unit that determines whether or not the reception of the trading data has been completed; and a unit that informs the client that the reception of the trading data has not been completed when the determining unit has determined that the reception of the trading data has not been completed; and wherein the database server comprises a unit that stores data received by the receiving unit in the web server.

### BRIEF DESCRIPTION OF THE DRAWINGS

Fig. 1 shows a general structure of an embodiment of a trading data management system according to the present invention.

Fig. 2 shows information of trading data of a client to be restored, which is stored in a DB server.

Fig. 3 shows an example of a display on a screen in a client.

Fig. 4 is a drawing visually showing a trading data restoration process executed when a transmission transaction of the trading data is interrupted due to the power failure of a client.

Fig. 5 is a drawing visually showing a trading data restoration process executed when a transmission transaction of the trading data is interrupted due to a session timeout.

Fig. 6 is a flowchart showing a procedure to register trading data at the normal time in accordance with a system as shown in Fig. 1.

Fig. 7 is a flowchart showing a restoration procedure of the trading data at the restoration time in accordance with a system as shown in Fig. 1.

Fig. 8 shows a general structure of another embodiment of a trading data management system according to the present invention.

### DESCRIPTION OF THE PREFERRED EMBODIMENTS

An embodiment will be explained in detail with reference to the accompanying drawings. In the following explanation of the drawings, the same part will be indicated with the same number.

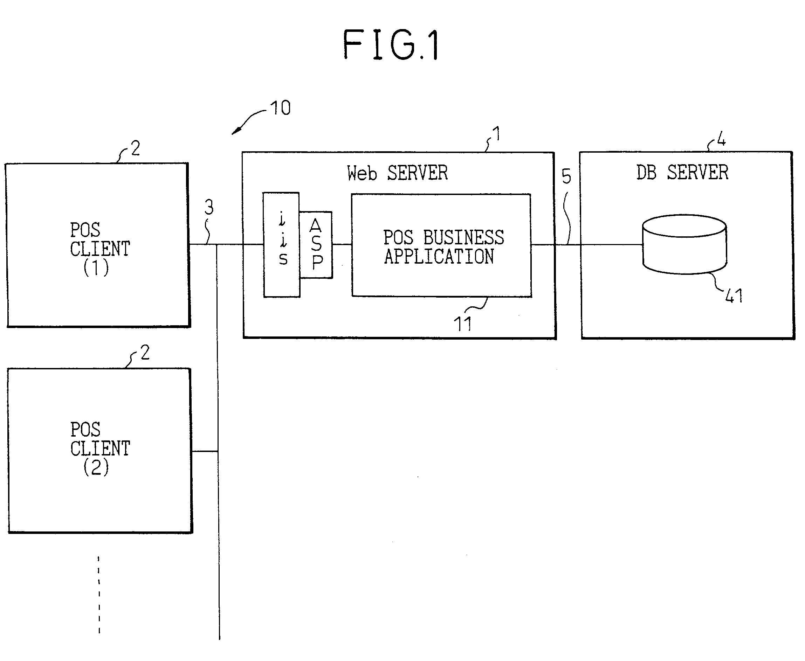

Fig. 1 shows a general structure of an embodiment of a trading data management system according to the present invention. As shown in Fig. 1, a trading data management system 10 of the invention is wholly shown in Fig. 1. In the system 10, a web server 1 and a plurality of POS clients (hereinafter simply described as clients) 2 are connected via a network 3 for communication, and the web server 1 is connected to a DB server 4 via a LAN (Local Area Network) 5. The network 3 may be a LAN or a WAN (Wide Area Network). In the system 10, each of the clients 2 is a cash register which is composed of a computer.

The web server 1 includes software such as IIS (Internet Information Services) and/or ASP (Active Server Pages) provided by Microsoft (Trademark). IIS has a function that transmits and receives data between computers on the Internet, while the ASP has a function of generating web pages. The web server 1 further includes a POS business application program 11 used for transmitting and receiving data concerning details of trade between the clients 2 and the DB server 4, and is used for restoring trading data received before an interruption occurred, as will be explained in the later.

The web server 1 receives trading data from the client 2 via the network 3, and transfers the data to the DB server 4. The DB server 4 stores the data in an external large capacity of storage unit 41.

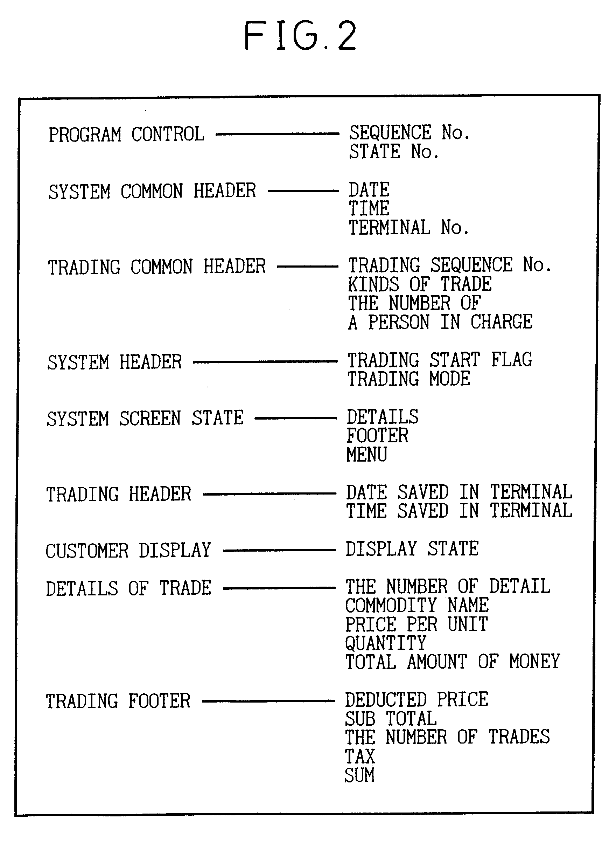

Fig. 2 shows information of trading data of a client to be restored, which is stored in a DB server. As shown in Fig. 2, in the DB server 4, as necessary information for restoring the trading data, information concerning program control, system common header, trading common header, system header, system screen state, trading header, customer display, details of trade, trading footer etc., are stored.

The information of the program control includes a sequence number and a state number. The sequence number indicates a number newly created when a stream of a routine for a trade branches off. For example, when a stream of a routine for a trade of a cash payment branches off and entered into a credit payment, the program control is switched from sequence No. 1 to sequence No. 2. On the other hand, the state number indicates an input state of a client in a trade, for example a number indicates a state when an amount of money is registered in a cash payment trade and the other number indicates a state when a payment method is registered.

The information in a system common header includes date and time of a trade and a terminal number of a client.

The information in a trading common header includes: data of trading sequence number (item number); kinds of trade such as a trade of sales or a trade of deposit or withdrawal, that indicate what kind of trade is handled; and the number of a person in charge (the number of a salesperson) working around a cash register (POS client). Herein, the trade of sales indicates a mode when data of details of trade is being input. The trade of deposit or withdrawal indicates a mode when deposit or withdrawal of money other than the trade of sales is being executed. To give an example, the trading of deposit or withdrawal indicates a mode when some ten-thousand yen bills, some five-thousand yen bills, some thousand yen bills, some five hundred yen coins, some hundred yen coins and some ten yen coins are being deposited or withdrawn in a cash register.

The information in the system header includes a trading start flag (TSFL) and data of trading kinds.

The information in the system screen states includes data concerning information of a part on a screen of a client display where the details of trade is shown, for example the position of a scroll bar; information of states of a footer indicating what kind of information is displayed in a footer; and information of states of a menu indicating what kind of information is displayed in a menu part.

The information of the trading header includes data of date and time of a trade saved in the terminal, namely a client.

The information of the customer display includes data indicating what is displayed on a screen in the customer display.

The information of the details of trade includes data of the number of the detail that is traded, name of commodities, price per unit, the quantity and total amount of money.

The information of the trading footer includes data of the deducted price, sub total amount of money, the number of trades (not shown on the screen), tax and the total number of trades.

Next, referring to a flowchart regarding a procedure of registering trading data and a procedure of restoring received trading data of which the transmission is interrupted for some reason, a trading data management system will be explained hereinafter, wherein the system includes a plurality of clients and a server connected via a communication network and the system manages data of trades generated at the client side.

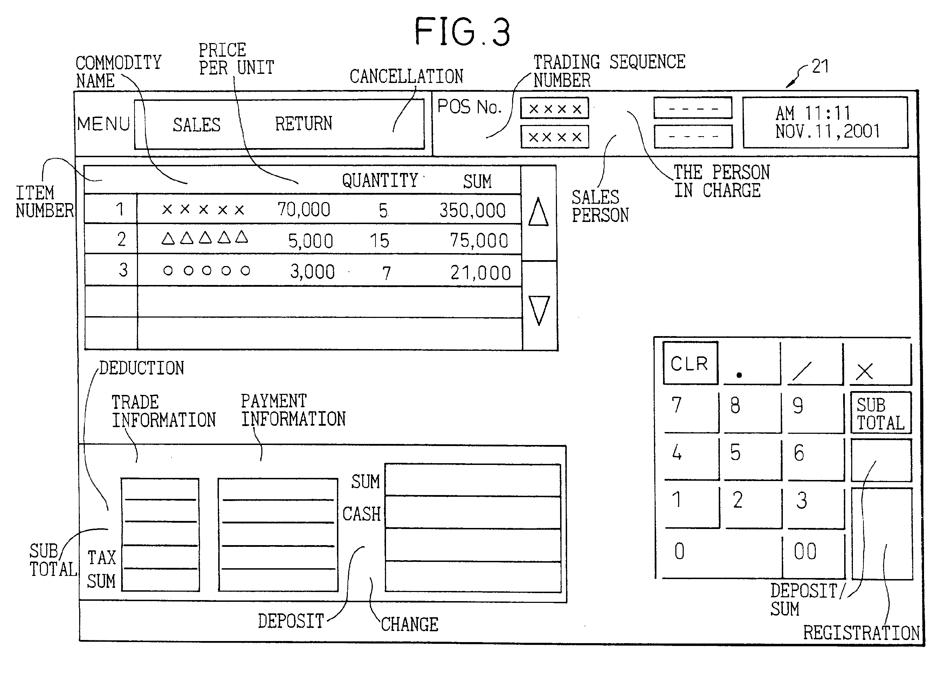

Fig. 3 shows an example of a content displayed on a screen in a display 21 of a client 2. On the screen in the display 21, a "numerical number key pad", a "registration key", a "sub total key", a "deposit/sum key" and a "clear key" are shown on the lower right side, "sales" is selected as a menu is shown on the upper left side, and a trading common header is shown on the upper left side. The trading common header includes a POS client number, a trading sequence number, a name of the person in charge, a sales person's name, the date, and the time. In addition, the details of trade including data of the number of detail of trade, name of commodities, price per unit, the number, and total amount of money, is shown on the middle left side on the screen in the display 21. The details of trade are read by means of a bar code reader that scans a label attached to each commodity one by one, and is stored in the DB server, as will be explained later. The trading footer including the deducted price, sub total amount of money, tax, and the total number of trades, is shown on the bottom left side on the screen in the display 21.

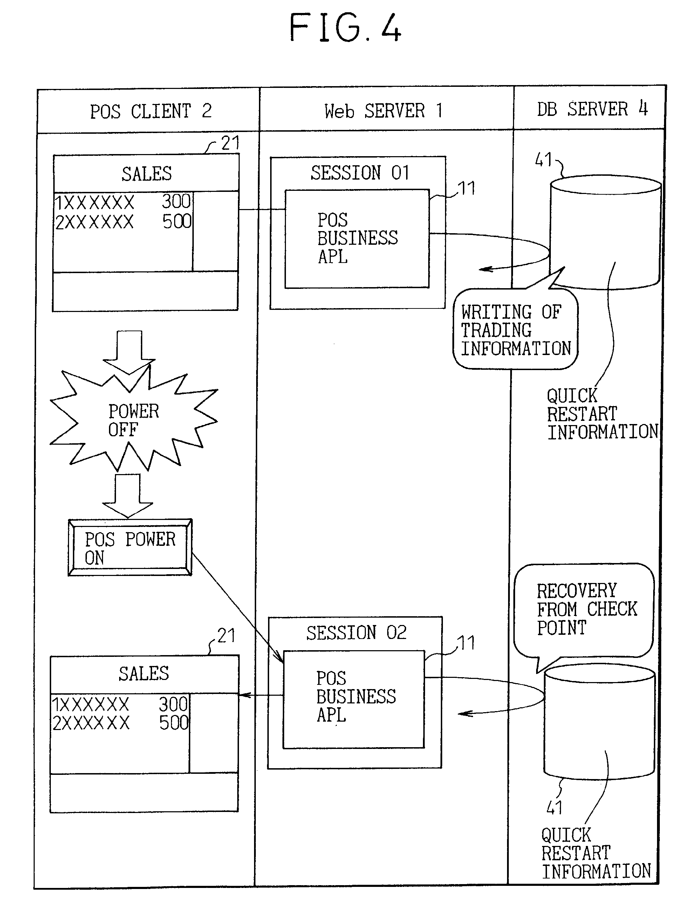

Fig. 4 is a drawing showing a trading data restoration process executed when a transmission transaction of the trading data is interrupted due to a power failure at a client. As can be seen from Fig. 4, the power supply failure at the client 2 has occurred while transmitting trading data from the client 2 to the web server 1 due to trouble, and the trading data receiving transaction by the web server has been interrupted in session No. 1. In this case, after the failure is removed, the data had been accumulated in the DB server 4 until the interruption occurred is returned to the client 2 from the web server 1 in session No. 2.

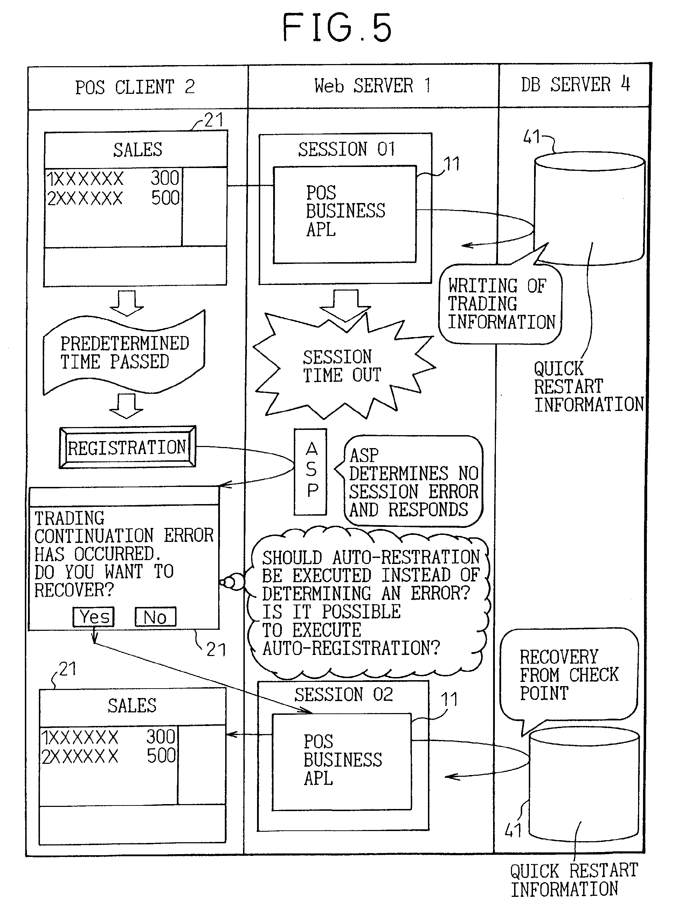

Fig. 5 is a drawing showing a trading data restoration process, executed when a transmission transaction of the trading data is interrupted due to a session timeout. As can be seen from Fig. 5, the trading data receiving transaction by the web server 1 is interrupted due to a session time out in session 1 that transmits the trading data from the POS client 2 to the web server 1. In this case, ASP in the web server 1 operates in such a way that a message asking "A trading continuation error has occurred. Do you want to recover (Yes or No) ?" is sent from web server 1 to the client 2. The client 2 receives the message and removes the trouble which caused the interruption, then an operator of the web server 1 enters into the session 2 by depressing "Yes" key in order to restart the receiving transaction. In session 2, the trading data that had been stored in the DB server 4 until the interruption occurred, is returned to the client 2, and the trading data is restored.

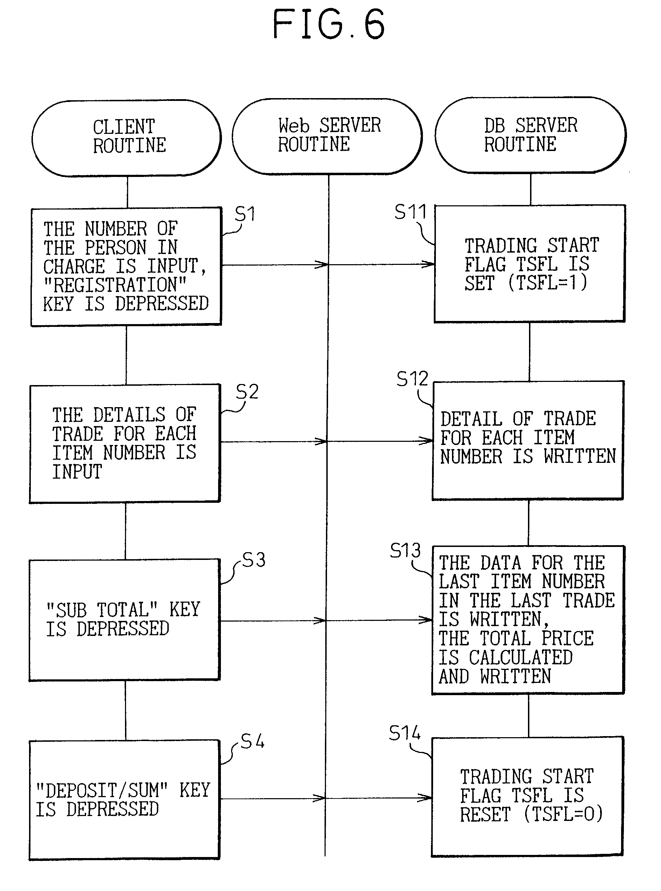

Fig. 6 is a flowchart showing a procedure to register the trading data at the normal time in accordance with a system as shown in Fig. 1. First, the mode of operation at the client side will be explained below.

In step S1, inputting the details of trade is started at the client side, the number of the person in charge is input and "registration" key is depressed. This makes the web server recognize that the client has declared that inputting the details of trade has been started.

In step S2, the details of trade such (item number i (where i = 1 to n, n is positive integer), name of commodities, unit price, quantity, total price and so on, is input in the order of the item number. This input can be done by a bar code reader that reads a label on which the details of trade is written item by item or the manual input of quantity or the like, after the scanning.

In step S3, the "sub total" key is depressed after entering the date of the details of trade for the item number "n".

In step S4, the "deposit/sum" key is depressed.

Next, the procedure to store data of the details of trade, that the DB server 4 received from the client 2 via the web server 1, will be explained.

In step S11, after acknowledging that the step S1 has been executed, a trading start flag (TSFL) of the client that executed the step S1 is set on. TSFL is a flag used for determining whether the trading data reception has been completed or not.

In step S12, every time the data of the detail of trade for the item number "i" is started to enter in step S2, the previous data for the item number "(i - 1)" is written in an external storage unit.

In step S13, the data for the item number "n" input in step S2 is written in the external storage unit, and the total price of the all items (i = 1 to n) is written in the storage unit.

In step S14, the trading start flag TSFL that is set in step S11 is reset.

In this way, the web server 1 receives data for each trading in sequence, transmitted from the client 2, and it accumulates the received data in the external storage unit 41 of the DB server.

If the receiving process of the trading data by the web server 1 is interrupted for some reason while the trading data is being transmitted from the client 2 to the web server 1, even if the steps S1 to S4 have been executed by the client side, the DB server 4 executes a process in the following way. After step S11 is executed, the DB server 4 does not execute step S12, thus steps S13 and S14 will not be executed, or the server 4 executes step S12 but does not execute steps S13 and S14, or the server 4 executes steps S12 and S13, but does not execute step S14.

Next, in the above case, after removing the reason for the interruption, a process for restoring the trading data that had been transmitted from the client side before the interruption occurred at the client side, will be explained hereinafter.

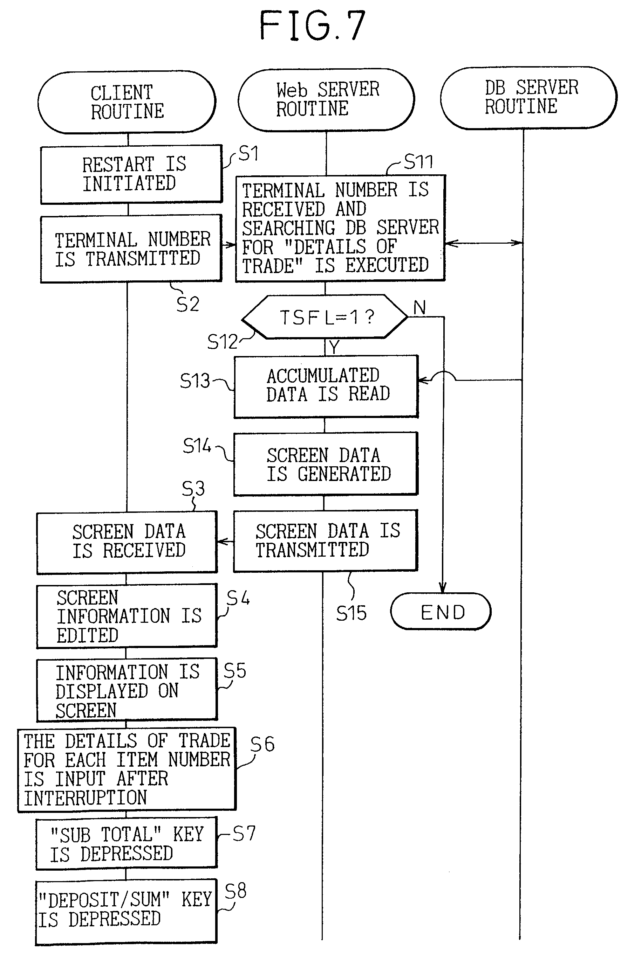

Fig. 7 is a flowchart showing a restoration procedure of the trading data at the restoration time in accordance with a system as shown in Fig. 1. First, the mode of operation at the client side will be explained below.

In step S1, in a case that the power failure occurred during the trading data transmission at the client 2, namely an interruption occurred, a restart is initiated by turning the power supply back on. Or, in another case that a failure occurred due to the session time out in a session that transmits trading data from the client 2 to the web server 1, restart is initiated as follows. Namely, after the session time out, the web server 1 sends a message asking "A trading continuation error occurred. Do you want to recover (Yes or No) ?" is sent to the client 2. The client 2 receives the message and an operator of the client 2 depresses the "Yes" key in order to restart the data transmission.

Herein, the session means a term during both ports each provided in each of the client and the server are kept open for communication. The ports are kept open until a time that a trade has been finished. When a power supply on the client side is momentarily shut off, and a predetermined time, for example twenty minutes, have passed, the port closes, namely the session closes, and therefore a session time out occurs. As a result, the trading data reentry becomes impossible, and a message to prompt the client to recover, generated from the web server and sent to the client, is displayed on a screen in the client.

In step S2, a terminal number of the client 2 is entered in the client side, and transmitted to the web server 1. Next, the operation in the web server side will be explained.

In step S11, the web server 1 receives the terminal number thereof from the client 2, detects a restart state of the client 2, and determines whether data as to details of trade, of which data has not completely written, is stored or not in the DB server 4, based on the user name (the user number), the store code representing the store number, the terminal number, and the address of the trading starting flag, TSFL of the client 2. Then, the web server 1 reads information such as the trading starting flag TSFL, program control information, system header information, and the system screen information etc corresponding to the terminal number of the client 2, for the purpose of reading information for restoring states of the screen of the client 2.

In step S12, the web server 1 determines whether the TSFL is on or off, determines that the trading data has not completely received when the TSFL is on, proceeds to step S13, and determines that the trading data has completely received when the TSFL is on and ends the routine.

In step S13, the web server 1 reads data as to details of trade accumulated before the occurrence of the interruption caused by a failure, from the DB server 4.

In step S14, the web server 1 creates screen data to be displayed in the client 2, using the trading data read in step S13.

In step S15, the web server 1 transmits the screen data created in step S14 to the client 2.

Again, the operation in the client side will be explained.

In step S3, the client 2 receives the screen data transmitted from the web server 1 in step S15.

In step S4, the client 2 edits pictures for displaying on the screen of the display unit 21 of the client 2 based on the screen data received in step S3.

In step S5, the client 2 displays the pictures edited in step S4 on the screen in the display unit 21. Accordingly, operators in the client 2 side can see, by watching the screen on the display unit 21, if the DB server 4 had received the data as to details of trade, for example how many number of the details of trade had been received by the DB server until the interruption occurred.

In step S6, an operator in the client 2, in the same way as step S2 as shown in Fig. 6, inputs the details of trade corresponding to the numbers greater than that read in step S5, which is the last-received number.

In step S7, the operator depresses the key for outputting "the sub total amount of money", after inputting the details of trade for the n-th number.

In step S8, the operator depresses the "deposit/sum" key.

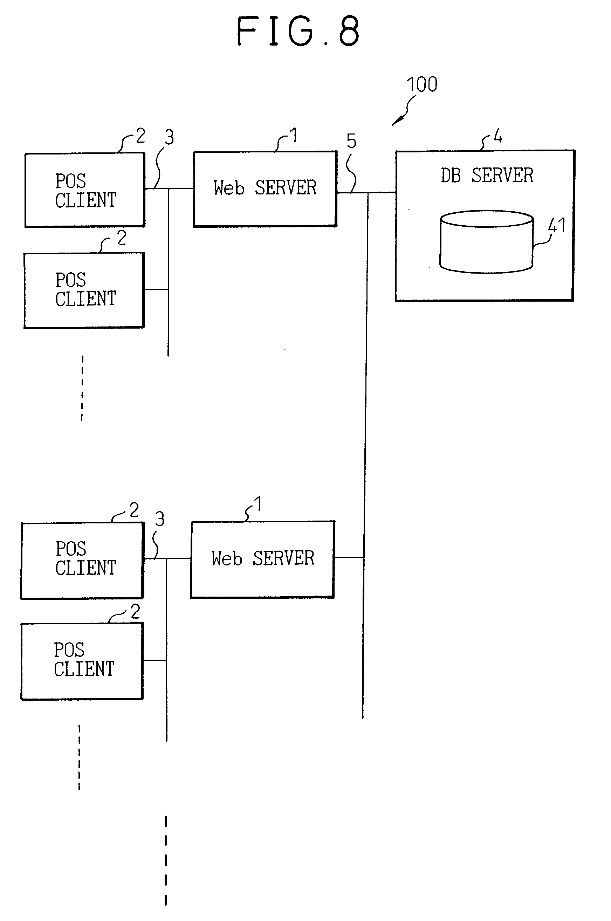

Fig. 8 shows a general structure of another embodiment of a trading data management system according to the present invention. The trading data management system 100, shown as a whole in Fig. 8, includes a plurality of POS clients 2, a plurality of web servers 1 each connected to the plurality of POS clients 2 via a respective communications network 3, and the DB server 4 connected to the web servers 1 via a LAN or WAN networks 5. The system 100 manages each data traded in the clients 2. The system 100 is the same as the system 1 shown in Fig. 1 except the following three points at least.
1. The capacity of the external storage unit 41 of the DB server 4 shown in Fig. 4 is much larger than that of the external storage unit 41 shown in Fig. 1.
2. The plurality of web servers 1 each has a respective number to distinguish it from other web servers 1.
3. The DB server 4 stores and manages trading data of the clients 2 corresponding to each of the web servers 1.

In the above explanation, flowcharts explained hereinbefore are written in a form of a program that the computer can execute. The program is recorded in a portable recording medium such as a CD-ROM, a flexible disc (FD), a DVD disc, a magneto-optical disc, an IC card etc. The program is stored in a database connected to a computer via a communications network by operating the computer with a modem or a LAN interface. The program is installed from the computer to a server or a client. The program installed in the server or the client is stored in an external storage unit, for example a hard disc (HD) in the server or the client. The program is appropriately written into a RAM from the HD in the server or the client, and executed by a CPU of the server or the client.

As explained hereinabove, according to a trading data management system, a method or a program of the present invention, in a trading data management system including a plurality of clients and a server connected thereto via a communications network, when an interruption occurred for some reason or other during the server is receiving trading data from a client, the system can restore data having been transmitted from the client in the previous transmission, after the reason for the interruption has overcome, which data had been accumulated in the server until the time the interruption occurred, even if the client is not provided with a large capacity external storage unit.

## Claims

1. A trading data management system, comprising a plurality of clients and a server connected via a communications network, that manages trading data transmitted from the clients to the server, **characterized in that** the server comprises:
a unit that sequentially receives trading data whenever the data is transmitted from the clients;
a unit that stores the trading data received from the clients;
a unit that determines whether or not the reception of the trading data has been completed; and
a unit that informs the client that the reception of the trading data has not been completed when the determining unit has determined that the reception of the trading data has not been completed.

2. A trading data management system according to claim 1, wherein the server further comprises a unit that returns trading data to the client when the determining unit has determined that the reception of the trading data has not been completed, which data had been transmitted until an interruption of the transmission occurred in the previous transmission, and had been accumulated in the server until the interruption.

3. A trading data management system according to claim 1, wherein the server further comprises a unit that returns trading data to the client before newly receiving trading data from the client when the determining unit has determined that the reception of the trading data has not been completed, which data had been transmitted until an interruption of the transmission occurred in the previous transmission, and had been accumulated in the server until the interruption.

4. A trading data management system according to claim 2, wherein the returning unit comprises a unit that creates screen information involving the trading data to be displayed in the client, and that transmits the created screen data to the client.

5. A trading data management system according to claim 3, wherein the returning unit comprises a unit that creates screen information involving the trading data to be displayed in the client, and that transmits the created screen data to the client.

6. A trading data management system according to claim 1, wherein the storing unit is provided in another server connected to the server.

7. A trading data management system according to claim 2, wherein the storing unit is provided in another server connected to the server.

8. A trading data management system according to claim 3, wherein the storing unit is provided in another server connected to the server.

9. A trading data management system according to claim 4, wherein the storing unit is provided in another server connected to the server.

10. A trading data management system according to claim 5, wherein the storing unit is provided in another server connected to the server.

11. A trading data management system, comprising a plurality of web servers each connected to a plurality of clients via a communications network and a database server connected to the web servers for communication, that manages trading data transmitted from the clients to the web servers, **characterized in that** the web server comprises:
a unit that sequentially receives trading data whenever the data is transmitted from the clients;
a unit that determines whether or not the reception of the trading data has been completed; and
a unit that informs the client that the reception of the trading data has not been completed when the determining unit has determined that the reception of the trading data has not been completed; and wherein the database server comprises a unit that stores data received by the receiving unit in the web server.

12. A trading data management system according to claim 11, wherein the web server further comprises a unit that returns trading data to a client when the determining unit has determined that the reception of the trading data has not been completed, which data had been transmitted before an interruption of the transmission occurred in the previous transmission from the client to the server, and had been accumulated in the storage unit in the database server until the interruption.

13. A trading data management system according to claim 11, wherein the web server further comprises a unit that returns trading data to the client before newly receiving trading data from the client when the determining unit has determined that the reception of the trading data has not been completed, which data had been transmitted before an interruption of the transmission occurred in the previous transmission and had been accumulated in the storage unit in the database server until the interruption.

14. A trading data management system according to claim 12, wherein the returning unit comprises a unit that creates screen information involving the trading data to be displayed in the client, and that transmits the created screen data to the client.

15. A trading data management system according to claim 13, wherein the returning unit comprises a unit that creates screen information involving the trading data to be displayed in the client, and that transmits the created screen data to the client.

16. A trading data management method that manages trading data transmitted from a plurality of clients to a server connected to the clients via a communications network in a system comprising the clients and the server, **characterized in that** the method comprises the steps of:
sequentially receiving trading data whenever the data is transmitted from the clients;
storing the trading data received from the clients;
determining whether or not the reception of the trading data has been completed; and
informing the client that the reception of the trading data has not been completed when the determining unit has determined that the reception of the trading data has not been completed.

17. A trading data management method according to claim 16, wherein the method further comprises the step of returning trading data to the client when the determining step has determined that the reception of the trading data has not been completed, which data had been transmitted until an interruption of the transmission occurred in the previous transmission, and had been accumulated in the server until the interruption.

18. A trading data management method according to claim 16, wherein the method further comprises the step of returning trading data to the client before newly receiving trading data from the client when the determining step has determined that the reception of the trading data has not been completed, which data had been transmitted until an interruption of the transmission occurred in the previous transmission, and had been accumulated in the server until the interruption.

19. A trading data management method according to claim 17, wherein the method further comprises the step of creating screen information to be displayed involving the trading data, and transmitting the created screen data to the client.

20. A trading data management method according to claim 18, wherein the method further comprises the step of creating screen information to be displayed involving the trading data, and transmitting the created screen data to the client.

21. A trading data management program that manages trading data transmitted from a plurality of clients to a server connected to the clients via a communications network in a system comprising the clients and the server, **characterized in that** the program makes the computer execute the steps of:
sequentially receiving trading data whenever the data is transmitted from the clients;
storing the trading data received from the clients;
determining whether or not the reception of the trading data has been completed; and
informing the client that the reception of the trading data has not been completed when the determining unit has determined that the reception of the trading data has not been completed.

22. Digital storage medium with control signals electronically readable from the digital storage medium, which interact with a programmable computer in a manner that all steps of the method according to any of claims 16 to 20 can be performed.

23. Computer-program-product with program-code-means stored on a machinereadable data carrier to perform all steps of any of claims 16 to 20, when the program is performed on a programmable computer.

24. Computer program with program-code-means to perform all steps of any of claims 16 to 20, when the program is performed on a programmable computer.

25. Computer program with program-code-means to perform all steps of any of claims 16 to 20, when the program is stored on a machinereadable data carrier.
